Europäisches Patentamt

European Patent Office

Office européen des brevets

(19)

(11) Publication number: **0 131 460**
**B1**

(12) EUROPEAN PATENT SPECIFICATION

(45) Date of publication of patent specification: **09.09.87**

(21) Application number: **84304661.6**

(22) Date of filing: **06.07.84**

(51) Int. Cl.⁴: **C 09 J 3/14,** C 08 F 240/00, C 08 F 8/04

(54) **Fully saturated petroleum resin and hot melt pressure sensitive adhesive formulations utilizing same as a tackifier.**

(30) Priority: **07.07.83 US 511518**

(43) Date of publication of application:
**16.01.85 Bulletin 85/03**

(45) Publication of the grant of the patent:
**09.09.87 Bulletin 87/37**

(84) Designated Contracting States:
**BE DE FR GB IT NL SE**

(56) References cited:
**EP-A-0 001 306**
**US-A-3 554 940**
**US-A-3 577 398**

(73) Proprietor: **Exxon Research and Engineering Company**
**P.O.Box 390 180 Park Avenue**
**Florham Park New Jersey 07932 (US)**

(72) Inventor: **Hughes, Vincent Leo**
**4431 Lake Lawford**
**Baton Rouge Louisiana (US)**
Inventor: **Looney, Ralph William**
**3735 Lake LaBerge Court**
**Baton Rouge Louisiana (US)**

(74) Representative: **Bawden, Peter Charles et al**
**ESSO CHEMICAL LIMITED Esso Chemical Research Centre PO Box 1**
**Abingdon Oxfordshire OX13 6BB (GB)**

Courier Press, Leamington Spa, England.

## Description

This invention relates to a petroleum resin having excellent tackifying properties for a saturated midblock thermoplastic elastomer. More particularly, it relates to a saturated, water white petroleum resin having a number average molecular weight of from 400 to 800, a softening point from 40°C to 70°C and a glass transition temperature of less than 45°C whereby said resin can provide the requisite tackification of pressure sensitive adhesives containing a block copolymer of styrene and hydrogenated polydiene and hot melt pressure sensitive adhesive compositions of both the solution cast and the hot melt application types containing said resin and said block copolymer.

## Background of the invention

Broadly speaking, adhesives can be classified into three categories: water based; solvent based and hot melt adhesives. In the case of water based or solvent based adhesives, energy from the outside, in some fashion, is applied to the system to evaporate the water or the solvent in order that an adhesive layer may be formed. For the solvent based types, the requisite evaporation of the solvent also introduces the solvent into the environment which both requires energy and can be deleterious to the surrounding environment. Costly solvent recovery equipment is then required to control pollution. It is for these reasons that hot melt pressure sensitive adhesives (hereinafter called HMPSA) are highly desirable since the elimination of water and solvent leads to a lower energy requirement to form the adhesive layer with hot melt systems.

The key requirement for a HMPSA is that it should have good cohesive and tackifying properties at ambient conditions. The adhesive should also have good flow characteristics if it is to be used in the bulk state, otherwise it should possess sufficient consistency when dissolved in suitable cosolvents so that it can be coated or sprayed on the surfaces to be bonded or the backing used to form a tape or label. Usually the HMPSA is prepared from a mixture of tackifying resin, polymer and possibly a plasticizer (when required to soften the adhesive and enhance the aggressive tack).

Certain commercial block copolymers such as a Shell's Kraton® are widely used as the polymer in HMPSA. The adhesives prepared from blends incorporating these polymers have very good adhesive and strength properties at room temperature and can be processed by conventional melt coating and extrusion techniques because of their good flow characteristics. Because of this excellent combination of properties exhibited by the ABA type of block copolymer when B represents a polydiene or a polyolefin block and A represents a polystyrene block, e.g. a thermoplastic elastomer, the use of such polymers for various HMPSA applications is growing in the industry.

However, these referenced block copolymers when used in combination with known tackifying resins for HMPSA blends have a serious drawback when blended with a major proportion of resin. Under this condition in order to realize the tackifying properties of the petroleum resin component of the blend, it is necessary to incorporate substantial levels of a plasticizer, usually a naphthenic oil or a liquid resin whereby the aggressiveness of tack and other requisite properties of these tertiary blends can be controlled. The use of plasticizers results in a number of deleterious effects on the using of HMPSA compositions including long term degradation of adhesion.

The petroleum resins generally used as tackifiers for Kraton® type block copolymers include those produced according to the teachings of U.S. Patent 3,577,398 wherein the polymeric resinous composition is obtained from the polymerization of a feedstock containing a mixture of piperylene, i.e. pentadiene-1,3 and 2-methyl-2-butene in the presence of anhydrous particulate aluminum chloride and a hydrocarbon diluent. The resinous products are reported as having softening points of about 80°C to about 110°C (col. 2 line 62) although upon steam stripping the softening points are raised to a range of about 90°C to about 110°C (col. 2, lines 69—70). Unfortunately, as indicated above, the use of a major proportion of such a resin as a tackifier for Kraton® type block copolymers requires from 5 to 30 weight percent of plasticizer in the tertiary blend to provide a useful pressure sensitive adhesive composition. Even more critical is the general unsuitability of such a tackifying resin for water-white saturated midblock thermoplastic elastomers since these resins are colored (not water-white) and have detrimental thermal and ultra-violet light stability. United States Patent 3554940 proposes hydrogenated aromatic resins be used for tackifying rubbers in hot melt pressure sensitive adhesives.

It is an object of this invention to provide an improved petroleum resin for tackification of pressure sensitive adhesive blends containing a saturated midblock thermoplastic elastomer.

## Statement of the invention

It has been discovered that the polymerization of a $C_5$ fraction feedstock having a major proportion of a mixture of piperylene and 2-methyl butenes with a total diolefin to monoolefin weight ratio of about 0.47, a total diolefin to 2-methyl butenes weight ratio of about 0.9 and a total cyclic diolefin to monoolefin ratio of about 0.02 in the presence of 1.5 weight percent particulate aluminum chloride produces a petroleum resin having a weight average molecular weight ($\bar{M}w$) of 800 to 960, a number average molecular weight ($\bar{M}n$) of 500 to 600 and a ($\bar{M}w$)/($\bar{M}n$) ratio of at least 1.3, which upon hydrogenation to saturation provided a water-white resin having a softening point of about 57°C and a glass transition temperature of less than 45°C, preferably about 20°C which in a binary blend with an ABA block copolymer of polystyrene

2

hydrogenated polydiene-polystyrene provided a useful HMPSA composition. Both ($\bar{M}$w) and ($\bar{M}$n) are measured by gel permation chromatography using a polyisobutylene standard and the glass transition temperature (Tg) is a thermal measurement using a differential scanning calorimeter (DuPont Instruments Model 990).

Thus in accordance with this invention, there is provided as a tackifier for hot melt adhesives a fully saturated petroleum resin prepared by polymerisation of a $C_5/C_6$ feed boiling in the range 20°C to 80°C possessing in its backbone structure a preponderance of substituted cyclohexane rings and having a number average molecular weight ($\bar{M}$n) of from 400 to 800, a softening point of 40 to 70°C, a glass transition temperature (Tg) of less than 45°C and when admixed at the total weight level of 60% with a styrene-ethylene/butene styrene saturated midblock thermoplastic elastomer sold as Kraton® G 1657, provides a HMPSA having a rolling ball tack of less than 10 cn and a Polyken probe tack greater than 400 g/cm².

The petroleum resin used in this invention makes possible in a binary blend a pressure sensitive adhesive formulation which comprises (a) a saturated midblock thermoplastic elastomer preferably composed of polystyrene blocks and a hydrogenated polydiene block and (b) a fully saturated petroleum resin prepared by polymerisation of a $C_5/C_6$ feed boiling in the range 20°C to 80°C and possessing in its backbone structure a preponderance of substituted cyclohexane rings and having a number average molecular weight ($\bar{M}$n) of from 400 to 800, a softening point of 40 to 70°C, a glass transition temperature (Tg) of less than 45°C preferably 10°C to 30°C and when admixed at the total weight level of 60% with a styrene-ethylene/butene styrene saturated midblock thermoplastic elastomer sold as Kraton® G 1657, and coated to a thickness of 1.5 mil on a polyester sheet backing, e.g. polyethylene terephthalate provides a HMPSA having a rolling ball tack of less than 10 cm and a Polyken probe tack greater than 400 g/cm².

Detailed description of the invention

In practicing this invention to produce the novel petroleum resin which has been found to provide tackification in binary blends to saturated midblock thermoplastic elastomers the feedstock composition, polymerisation conditions and hydrogenation conditions are critical if one is to obtain the fully saturated resin possessing the requisite molecular weight, softening point and preferred glass transition temperature properties.

Feedstock

The feedstock is obtained as a $C_5$—$C_6$ fraction from steam cracked naphtha or light refinery streams with a boiling range of from 20°C to 80°C and a major proportion of piperylene and usefully 2-methyl butenes as the polymerizable content of said fraction. This $C_5$—$C_6$ fraction can be usefully adjusted in a suitable way to provide a weight ratio of total diolefin to monoolefin of from 0.7 to 1.0; however, when other less reactive monoolefins are present in the feedstock this latter ratio range is extended without prejudice to the product resin to from 0.5 to 1.0.

The diolefins as hereabove referred to are those represented by cyclopentadiene, cis and trans 1,3-pentadiene and isoprene. The total monoolefins include both five and six carbon hydrocarbons such as 2-methyl-1-butene, 2-methyl-2-butene, cyclopentene, 1-pentene, cis and trans-2-pentene, trans-4-methyl pentene, 2-methyl pentene and 1-hexene. The total 2-methyl butenes include both isomers of the above butenes. The total diolefins include all five and six carbon hydrocarbons such as 1,3-cyclopentadiene.

The above said adjustment of weight ratio between the diolefins and monoolefins or 2-methyl butenes may be effected by any of the customary procedures without any particular restriction, such as, for example, removal of isoprene by precise fractional distillation; adjustment of the concentration of diolefins and monoolefins by extractive or azeotropic distillation; removal of diolefins by thermal dimerization as described in U.S. Patent 4,358,574; and addition of a $C_5$ fraction which has been deprived of diolefins (i.e. so called spent $C_5$ fraction). A typical feedstock composition is set forth hereafter in Example 1.

Polymerization

In carrying out the polymerization reaction, the hydrocarbon mixture is brought into contact with the anhydrous aluminum chloride catalyst. Generally, the catalyst is used in particulate form. Generally a particle size in the range of from about 5 to about 200 mesh size (4.0 to 0.074 mm) is used although larger or smaller particles can be used. The amount of catalyst used ranges from 1.0 to 2.0, preferably 1.5, weight percent. The catalyst may be added to the olefinic hydrocarbon mixture or the hydrocarbon mixture may be added to the catalyst. The reaction can be conducted continuously or by batch process techniques generally known to those skilled in the art.

The reaction would also be carried out at a pressure of from 10 to 80, preferably 20, psi (69 to 552, preferably 138 KPa). Since the number average molecular weight of the product polymerize is important to the invention, the other reaction parameters of; temperature which ranges from 30°C to 100°C, more usefully from 50°C to 75°C, preferably about 60°C; and, time of polymerization which ranges from 0.5 to 2.0 hours, preferably 1 hour, should be controlled.

The reaction is conveniently carried out in the presence of a diluent because the reaction is usually exothermic and the resulting product is viscous. However, with adequate mixing and cooling, the temperature can be controlled and reaction conducted with only sufficient diluent to maintain good transfer out of the heat of polymerization. The diluent may be introduced as a component of the feedstock for resinification, e.g. in the example alkanes are introduced as a significant (about 35%) component of the piperylene rich feedstream. Various other diluents which are inert in that they do not enter into the polymerization reaction may be used. Representative examples of inert diluents are aliphatic hydrocarbons such as pentane, hexane and heptane, aromatic hydrocarbons such as toluene and benzene, and unreacted residual hydrocarbons from the reaction.

## Unsaturated precursor resins

The resulting polymeric product can be considered a synthetic hydrocarbon resin which has in its backbone structure a high degree of substituted 1,4-cyclohexene and cyclohexane type of rings. Such rings come about from the backbitting which occurs when a feedstock containing a large percentage of 1,3-dienes (piperylenes) is polymerized cationically with a Lewis acid such as aluminum chloride and utilized 2-methylbutenes for chain transfer or termination. The polymerizate product is characterized by a number average molecular weight ($\bar{M}n$) of from 400 to 800, and softening point ranging from 75—95°C as measured by ASTM E-28.

## Hydrogenation

The hydrogenation can be any conventional means which does not affect the molecular weight of the precursor resin, as for example by hydrogenation over a massive nickel catalyst at 200 to 1200 psig (1379 to 8274 KPa) hydrogen pressure at 230°C to 270°C for a suitable period. Hydrogenation of the resin for purposes of this invention is realized when the resin is fully saturated (all the C to C double bonds are hydrogenated) and the softening point and glass transition temperature are within the desired range, i.e. 40 to 70°C and less than 45°C, respectively. This level of hydrogenation also destroys the color bodies present in the unsaturated resin.

All of the hydrogenations of the disclosure were performed in a one gallon (4.54 l) stainless steel (316) batch autoclave. The catalyst was Harshaw Ni 3266 E 1/8" extrudates which is a massive Ni catalyst. It was contained in a cylindrical basket made of a heavy wire screen which fits snugly against the inner wall of the reactor and had an annulus slightly larger than the turbine blade agitator which was located in the center of this annulus. The catalyst was activated according to the manufacturer's preferred procedure. The hydrogenation procedure was to charge the reactor with 300 grams of the resin dissolved in enough n-heptane to make 1/2 gallon (2.27 litres) of solution at room temperature. The reactor was pressured to 50 psig (344 KPa) with $H_2$ and then heated as rapidly as possible to the desired temperature but care was taken to ensure this temperature was never exceeded by more than 3°C. The heating time to 200°C was approximately 2 hours. The reactor was then pressured to 900 psig (6205 KPa) with hydrogen and maintained at this pressure for the duration of the run which was normally 4 hours.

## Saturated resin tackifie

The resin of the invention is the fully saturated precursor resin discussed above which upon hydrogenation produces a fully saturated petroleum resin possessing in its backbone structure a preponderance of substituted cyclohexane rings and having a number average molecular weight ($\bar{M}n$) of from 400 to 800, a softening point of 40 to 70°C, a glass transition temperature (Tg) of less than 45°C and when admixed at the level of 60% with Kraton® G 1657, a saturated midblock thermoplastic elastomer, provides a HMPSA having a rolling ball tack of less than 10 cm and a Polyken probe tack greater than 400 g/cm². The resin of the invention is an excellent tackifier for saturated midblock thermoplastic elastomers as represented by styrene-ethylene/butene-styrene block polymers such as Shell Chemical Company's Kraton® G 1657. The softening points are measured by ASTM E-28.

## Saturated midblock thermoplastic elastomers

The saturated midblock thermoplatic elastomers usefully tackified by the resin of this invention are commercially exemplified by ABA type block copolymers of (A) polystyrene and (B) a polydiene which is typically selected from the group consisting of polybutadiene and polyisoprene wherein the unsaturated midblock of either polybutadiene or polyisoprene is hydrogenated to yield a saturated midblock segment. Commercially available hydrogenated block copolymers are manufactured by Shell Chemical Company and sold under the tradename: Kraton® G. An extensive discussion of said block copolymers and formulation of them into adhesives can be found in Rubber Chemistry and Technology, *55*, pages 208—218 (1981). The block copolymers with the saturated midblock segment have an $\bar{M}n$ as measured by GPC of about 25,000 to about 300,000, more preferably about 30,000 to about 200,000, and most preferably about 50,000 to about 150,000.

## Hot melt pressure sensitive adhesive blend

The HMPSA is generally a blend of the tackifier petroleum resin described herein in amounts ranging from 100 to 180, preferably 140 to 180, optimally about 160 parts of resin with 100 parts of the saturated midblock thermoplastic elastomer formulation generally includes a phenolic antioxidant such as Irganox® 1010 in amounts ranging from 1 to 5, generally 2, weight percent based on the total amount of the resin-copolymer components. The HMPSA blends of the invention can also include other tackifiers such as

4

another petroluem resin, diluents and plasticizers and other elastic polymers in order to make minor adjustments in the adhesive properties of the HMPSA.

As indicated a useful approach to defining the tackifying resin of the invention is to measure the adhesive properties of a blend of 150 weight parts tackifying resin (60% of the total blend) with 100 weight parts of a saturated midblock thermoplastic elastomer such as Kraton® G 1657. Such a blend provides a HMPSA having a rolling ball tack of less than 10 cm., usually 2 to 6 cm. and a Polyken probe tack of greater than 400, preferably at least 600, g./cm.$^2$.

The advantages of the HMPSA formulations of the present invention can be more readily appreciated by reference to the following examples.

Example 1

As an Example of this invention a precursor petroleum resin was prepared by polymerizing a $C_5$ to $C_6$ fraction having a boiling point of 22°C to 65°C having a composition shown in Table I.

TABLE I
Typical composition of hydrocarbon fraction

| | | | |
|---|---|---|---|
| 2-Methylbutane | 29% | by weight | |
| 2-Methyl-1-butene | 4% | " | " |
| Isoprene | 1% | " | " |
| 2-Methyl-2-Butene | 19% | " | " |
| Cyclopentadiene | 1% | " | " |
| Cis/trans 1,3-pentadiene | 20% | " | " |
| Cyclopentene | 7% | " | " |
| Other $C_5/C_6$ Olefins | 13% | " | " |
| Other alkanes | 7% | " | " |
| Total diolefins to 2-methyl butenes (wt. ratio) | =0.96 | | |
| Total cyclic diolefins to monoolefins (wt. ratio) | =0.02 | | |
| Total diolefins to mono-olefins (wt. ratio) | =0.51 | | |

Four hundred grams of the fraction shown on Table I were fed into a reactor containing 6.0 g of anhydrous AlCl$_3$ dispersed in 10 ml of benzene and equipped with a stirrer, a condenser and a thermometer. As the addition of the feed to the catalyst started, the temperature of the reaction increased slowly until a maximum temperature of 68°C was achieved. The addition of the feed usually takes place during 30 minutes followed by 30 minutes of further reaction.

At the end of the 1 hour reaction time the reaction was quenched by adding 200 ml of distilled water. The total reaction contents were placed in a separatory funnel and washed twice with 2 liters of a 3 to 1 mixture of water to isopropanol.

The now clean dilute polymerizate was placed in a two-necked flask and heated under nitrogen to 195°C to volatalize the unreacted olefins and alkanes leaving behind a mixture of oligomers and the hydrocarbon resin. This mixture was further stripped by steam to separate the oligomers from the resin. This separation was carried out at 250°C until 250 ml of steam condensate were collected in the received flask leaving behind 140 g of precursor resin having the properties outlined in Table IA.

TABLE IA
Typical composition of hydrocarbon fraction serving as the precursor resin

| | |
|---|---|
| Softening point (ring and ball method ASTM E-28) | 80°C |
| Cloud point (20/40/40) (Wax/resin/EVA) | 60°C |
| Gardner color (50 wt.% resin in toluene) | 6 |
| $\overline{M}w$ | 890 |
| $\overline{M}n$ | 560 |
| $\overline{M}w/\overline{M}n$ | 1.6 |
| Tg (glass transition temperature as measured by thermo mechanical analysis) | 53°C |

300 grams of the precursor resin was dissolved in 1.5 to 2 liters of hexane. The solution was placed in a 1 gallon (4.54 l) batch hydrogenation reactor and therein the resin was hydrogenated over a massive Ni catalyst (Harshaw 3266) at 1,000 (6895 KPa) hydrogen pressure at 190°C. After approximately 5 hours at the above conditions, the reactor was drained and the hexane was removed by vacuum/steam stripping. The resulting fully saturated resin was water-white and had the following properties outlined in Table IB.

TABLE IB
Composition of saturated resin

| | |
|---|---|
| Softening point (ring and ball method ASTM E-28) | 59°C |
| Cloud point (20/40/40) | 60°C |
| Gardner color (50 wt.% resin in toluene) | 1 |
| $\overline{M}w$ | 890 |
| $\overline{M}n$ | 560 |
| $\overline{M}w/\overline{M}n$ | 1.6 |
| Tg (glass transition temperature as measured thermo mechanical analysis) | 36°C |
| Tg (as measured by differential scanning calorimetry using the referenced DuPont apparatus) | 20°C |

The above data show that the hydrogenation lowered the softening point and Tg of the unsaturated resin and provided a water-white, fully saturated tackifying resin of the invention without affecting the molecular weights.

Examples 2—5

Four HMPSA formulations were each prepared by dissolving by agitation 100 weight units of Kraton® G block copolymer purchased from Shell Chemical Company, Houston, Texas, 2 weight units of a commercial phenolic antioxidant Irganox® 1010 purchased from Ciba-Geigy Corporation, Summit, New Jersey and the indicated weight units of the saturated resin of the invention for Examples 2—4 and a commercial tackifying resin for Example 5 in enough toluene to make a 50 wt% solution. The adhesive was cast from the test formulation onto a 1.5 mil thick polyethylene terephthalate (Mylar®) film to provide a dry adhesive film thickness of 1.5 mil. The results are shown in Table II.

TABLE II
Pressure sensitive adhesive formulation results

| | Example 2 | Example 3 | Example 4 | Example 5 |
|---|---|---|---|---|
| Formulation PHR* | | | | |
| Kraton® G (1657)** | 100 | 100 | 100 | 100 |
| Table IB resin | 80 | 120 | 160 | 80*** |
| Antioxidant | 2 | 2 | 2 | 2 |
| Test results | | | | |
| Rolling ball tack, cm (PSTC test #6) Initial | 6 | 8 | 8 | 14 |
| 180°C peel, lb/inch (PSTC #1) Initial | 2.6 (0.46 Kg/cm) | 3.2 (0.57 Kg/cm) | 3.8 (0.678 Kg/cm) | 2.6 (0.46 Kg/cm) |
| 90° quick stick, lb/inch (PSTC test #1A) Initial | 1.4 (0.25 Kg/cm) | 2.1 (0.37 Kg/cm) | 2.7 (0.48 Kg/cm) | 1.2 (0.21 Kg/cm) |
| Polyken tack, g/cm² (ASTMD-2979) Initial | 870 | 1380 | 1543 | 650 |

\* PHR refers to "parts hundred rubber" which herein refers to copolymer as the rubber.
\*\* Kraton® G (1657) is sold by Shell Chemical Company of Houston, Texas.
\*\*\* Escorez Resin 5380 sold by Exxon Chemical Americas, of Houston, Texas.
PSTC Tests 1, 1A and 6 are published by Pressure Sensitive Tape Council, Glenville, ILL 60025.
ASTMD-2979 refers to the test specified by American Society for Testing Materials.

These data clearly show that the tackifying resin of the invention is a much superior tackifier for Kraton® G 1657 than a commercially available tackifying resin. At twice the loading, 160 phr vs. 80 phr, the new tackifying resin show superior properties in all categories. In addition, at 160 phr the viscosity of the formulation is low enough so that no processing oil would be needed for good application rates.

Where the HMPSA of the invention requires the incorporation of a solvent to facilitate its coating or spraying onto the surfaces to be bonded it is preferred to utilize naphtha as the solvent to provide a concentration level of 35 to about 55 weight percent of elastomer and saturated petroleum resin dissolved in said solvent, said weight percent based on the total weight of the solution.

**Claims**

1. The use as a tackifier in hot melt adhesives of a fully saturated petroleum resin prepared by the polymerisation of a $C_5/C_6$ feed boiling in the range 20°C to 80°C and possessing in its backbone structure a preponderance of substituted cyclohexane rings and having a number average molecular weight ($\bar{M}n$) of from 400 to 800, a softening point of 40 to 70°C, a glass transition temperature (Tg) of less than 45°C and when admixed at the total weight level of 60% with a styrene-ethylene/butene-styrene saturated midblock thermoplastic elastomer provides a hot melt pressure sensitive adhesive (HMPSA) having a rolling ball tack of less than 10 cm and a Polyken probe tack greater than 400 g/cm².

2. The use according to claim 1 in which the resin has a glass transition temperature of from 10°C to 30°C and softening point in the range of 50°C to 65°C.

3. A hot melt pressure sensitive adhesive (HMPSA) formulation which comprises (a) a saturated midblock thermoplastic elastomer and (b) about 100 to 180, parts by weight per 100 parts by weight of said elastomer of a fully saturated petroleum resin prepared by the polymerisation of $C_5/C_6$ feed boiling in the range 20°C to 80°C and possessing in its backbone structure a preponderance of substituted cyclohexane rings and having a number average molecular weight ($\bar{M}n$) of from 400 to 800, a softening point of 40 to 70°C, a glass transition temperature (Tg) of less than 45°C and when admixed at the total weight level of 60% with a styrene-ethylene/butene-styrene saturated midblock thermoplastic elastomer, provides a HMPSA having a rolling ball tack of less than 10 cm and a Polyken probe tack greater than 400 g/cm².

4. A HMPSA formulation according to claim 3 containing up to 2 weight percent of an antioxidant.

7

# 0 131 460

5. A HMPSA formulation according to claim 3 wherein said elastomer is a hydrogenated block copolymer of styrene and polydiene.

6. A HMPSA formulation according to claim 5 containing a naphtha solvent, said elastomer and saturated petroleum resin being dissolved in said solvent at a concentration level of 35 to about 55 weight percent based on the total weight of said composition.

## Patentansprüche

1. Verwendung eines durch Polymerisation einer $C_5/C_6$-Beschickung mit einem Siedebereich von 20 bis 80°C hergestellten, vollständig gesättigten Erdölharzes, welches in seiner Gerüststruktur eine Überweigende Zahl von substituierten Cyclohexanringen besitzt, ein durchschnittliches (Zahlenmittel) Molekulargewicht ($\overline{M}n$) von 400 bis 800, einen Erweichungspunkt von 40 bis 70°C und eine Einfriertemperatur (Tg) von weniger als 45°C aufweist und beim Vermischen eines Anteils von 60%, bezogen auf das Gesamtgewicht, mit einem gesättigten, thermoplastischen Mittelblock-Elastomer aus Styrol-Ethylen/Buten-Styrol einen druckempfindlichen Heißschmelzklebstoff (HMPSA) mit einer mit rollender Kugel bestimmten Klebrigkeit von weniger als 10 cm und einer mit Polyken-Taster bestimmten Klebrigkeit von mehr als 400 g/cm² ergibt, als Klebrigmacher in Heißschmelzklebstoffen.

2. Verwendung gemäss Anspruch 1, wobei das Harz eine Einfreiertemperatur von 10 bis 30°C und einen Erweichungspunkt im Bereich von 50 bis 65°C aufweist.

3. Druckempfindliche Heißschmelzklebstoff (HMPSA)-Zusammensetzung, enthaltend a) ein gesättigtes, thermoplastisches Mittelblock-Elastomer und b) pro 100 Gewichtsteile des Elastomeren etwa 100 bis 180 Gesichtsteile eines durch Polymerisation einer $C_5/C_6$-Beschickung mit einer Siedebereich von 20 bis 80°C hergestellten, vollständig gesättigten Erdölharzes, welches in seiner Gerüststruktur eine überwiegende Zahl von substituierten Cyclohexanringen besitzt, ein durchschnittliches (Zahlenmittel) Molekulargewicht ($\overline{M}n$) von 400 bis 800, einen Erweichungspunkt von 40 bis 70°C und eine Einfriertemperatur (Tg) von weniger als 45°C aufweist und beim Vermischen eines Anteils von 60%, bezogen auf das Gesamtgewicht, mit einer gesättigten thermoplastischen Mittelblock-Elastomer aus Styrol-Ethylen/Buten-Styrol einen druckempfindlichen Heißschmelzklebstoff (HMPSA) mit einer mit rollender Kugel bestimmten Klebrigkeit von weniger als 10 cm und einer mit Polyken-Taster bestimmten Klebrigkeit von mehr als 400 g/cm² ergibt.

4. HMPSA-Zusammensetzung gemäss Anspruch 3, enthaltend bis zu 2 Gew.-% eines Antioxidantionsmittels.

5. HMPSA-Zusammensetzung gemäss Anspruch 3, worin das Elastomer ein hydriertes Blockcopolymer von Styrol und Polydien ist.

6. HMPSA-Zusammensetzung gemäss Anspruch 5, enthaltend ein Schwerbenzol-Lösungsmittel, wobei das Elastomer und das gesättigte Erdölharz in dem Lösungsmittel in einer Konzentration von 35 bis etwa 55 Gew.-%, bezogen auf das Gesamtgewicht der Zusammensetzung, gelöst sind.

## Revendications

1. Utilisation comme agent d'adhésivité dans des adhésifs thermofusibles d'une résine de pétrole totalement saturée, préparée par polymérisation d'une charge en $C_5/C_6$ bouillant dans l'intervalle de 20°C à 80°C, qui possède dans la structure de son squelette une prépondérance de noyaux cyclohexane substitués, a une moyenne en nombre du poids moléculaire ($\overline{M}n$) comprise entre 400 et 800, un point de ramollissement compris entre 40 et 70°C, une température de transition vitreuse (Tg) inférieure à 45°C et, lorsqu'elle est mélangée à la teneur totale en poids de 60 % à un élastomère thermoplastique à séquence médiane saturée styrène-éthylène/butène-styrène, donne un adhésif thermofusible sensible à la pression (ATSP) ayant une aptitude à l'adhésivité par essai à la bille roulante inférieure à 10 cm et une aptitude à l'adhésivité par essai à la sonde Polyken supérieure à 400 g/cm².

2. Utilisation suivant la revendication 1, dans laquelle la résine possède une température de transition vitreuse comprise entre 10°C et 30°C et un point de ramollissement compris entre 50°C et 65°C.

3. Formulation d'adhésif thermofusible sensible à la pression (ATSP), qui comprend (a) un élastomère thermoplastique à séquence médiane saturée et (b) environ 100 à 180 parties en poids pour 100 parties en poids dudit élastomère d'une résine de pétrole totalement saturée préparée par polymérisation d'une charge en $C_5/C_6$ bouillant dans l'intervalle de 20°C à 80°C, qui possède dans la structure de son squelette une prépondérance de noyaux cyclohexane substitués, a une moyenne en nombre du poids moléculaire ($\overline{M}n$) comprise entre 400 et 800, un point de ramollissement compris entre 40 et 70°C, une température de transition vitreuse (Tg) inférieure à 45°C et, lorsqu'elle est mélangée à la teneur totale en poids de 60 % à un élastomère thermoplastique à séquence médiane saturée styrène-éthylène/butène-styrène, donne un adhésif thermofusible sensible à la pression ayant une aptitude à l'adhésivité par essai à la bille roulante inférieure à 10 cm et une aptitude à l'adhésivité par essai à la sonde Polyken inférieure à 400 g/cm².

4. Formulation d'adhésif thermofusible sensible à la pression suivant la revendication 3, contenant jusqu'a 2% en poids d'un anti-oxydant.

5. Formulation d'adhésif thermofusible sensible à la pression suivant la revendication 3, dans laquelle l'élastomère est un copolymère séquencé hydrogéné de styrène et de polydiène.

8

6. Formulation d'adhésif thermofusible sensible à la pression suivant la revendication 5, contenant un naphta servant de solvant, l'élastomère et la résine de pétrole saturée étant dissous dans ledit solvant à une concentration de 35 à environ 55 % en poids, sur la base du poids totale de ladite composition.